# EUROPÄISCHE PATENTANMELDUNG

(11) **EP 3 816 650 A1**
(43) Veröffentlichungstag der Anmeldung: **05.05.2021**
(21) Anmeldenummer: 20189607.3
(22) Anmeldetag: 05.08.2020
(51) Int. Cl.: G01S 5/02, H04W 64/00

(54) **VERFAHREN UND ANORDNUNG ZUR POSITIONSBESTIMMUNG EINES MOBILEN KOMMUNIKATIONSENDGERÄTES**

(71) Anmelder: Siemens Schweiz AG, 8047 Zürich (CH)
(72) Erfinder: Frey, Christian, 6314 Unterägeri (CH)
(74) Vertreter: Maier, Daniel Oliver

(57) **Zusammenfassung**

Verfahren und Anordnung zur Positionsbestimmung eines mobilen Kommunikationsendgerätes, wobei eine ortsfeste Referenz-Funkbake (Referenz-Beacon) (RFB1) bereitgestellt wird, die eingerichtet ist, in Kollaboration mit entsprechend eingerichteten mobilen Kommunikationsendgeräten (MG1-MG6), die sich in Funkreichweite der Referenz-Funkbake befinden, deren Position zu bestimmen, wobei ein weiteres, sich nicht in der Funkreichweite der Referenz-Funkbake befindliches mobiles Kommunikationsendgerät (MG7) eingerichtet ist zur Kollaboration mit den mobilen Kommunikationsendgeräten, die sich in Funkreichweite der Referenz-Funkbake befinden, und wobei basierend auf deren jeweiligen bestimmten Position der in Funkreichweite der Referenz-Funkbake befindlichen mobilen Kommunikationsendgeräten die Position des weiteren mobilen Kommunikationsendgerätes bestimmt wird.

## Beschreibung

Die Erfindung betrifft ein Verfahren und Anordnungen zur Positionsbestimmung eines mobilen Kommunikationsendgerätes, wobei eine ortsfeste Referenz-Funkbake (Referenz-Beacon) eingerichtet ist, in Kollaboration mit entsprechend eingerichteten mobilen Kommunikationsendgeräten, die sich in Funkreichweite der Referenz-Funkbake befinden, deren Position zu bestimmen.

Da das Global Positioning System GPS (Globales Positionsbestimmungssystem) in Innenräumen nicht funktioniert, kommen bei der Indoor-Positionsbestimmung andere Ortungstechnologien zum Einsatz. Die bekanntesten sind WLAN und Beacons. Die Indoor-Positionsbestimmung mit Beacons (z.B. iBeacon (Apple) oder Eddystone (Google)) bietet entscheidende Vorteile für Projekte, die auf hohe Genauigkeit angewiesen sind und mobile elektronische Geräte einbeziehen wollen. Beacons (z.B. basierend auf BLE, Bluetooth Low Energy) sind typischerweise Sender in clientbasierten Methoden oder Verfahren.

Spezielle Techniken zur Indoor-Positionsbestimmung braucht man überall dort, wo GPS nicht funktioniert, also vor allem in Gebäuden. Die am weitesten verbreiteten Methoden sind wie oben erwähnt, WLAN und Bluetooth-Beacons. Zusätzlich wird meist auf die verschiedenen Sensoren des Smartphones (u.a. Barometer, Beschleunigungssensor, Gyroskop, Magnetometer) zurückgegriffen, die das Ergebnis einer Positionsbestimmung noch genauer machen können.

Es gibt jedoch grundsätzlich zwei verschiedene Techniken zur Indoor-Positionsbestimmung: Die endgerätebasierte (clientseitige) Positionierung und die infrastrukturbasierte (serverseitige) Positionierung.

Die endgerätebasierte (clientseitige) Positionierung wird meist mit Beacons oder WLAN Accesspoints umgesetzt. Diese senden regelmäßig Signale. Das Endgerät analysiert die Signalcharakteristik und gleicht sie mit einer Referenzdatenbank ab. Hierzu ist eine App notwendig, an die auch Nachrichten gesendet werden können (Rückkanal). Die Position wird direkt auf dem Endgerät bestimmt, was dem Nutzer ein Höchstmass an Datenschutz bietet. Diese Methode kommt üblicherweise bei der klassischen Indoor-Navigation mittels Smartphone App zum Einsatz.

Die infrastrukturbasierte (serverseitige) Positionierung kehrt das oben beschriebene Verfahren um. Ein WiFi-fähiges Endgerät/Tag oder ein Bluetooth Beacon sendet Signale aus (MAC-Adresse), die von einer spezifischen Hardware detektiert und an einen Server weitergeleitet werden. Im Backend werden die ermittelten Messdaten abgeglichen, interpoliert und in weiteren Systemen dargestellt. Dieses Verfahren hat den Vorteil, dass auch Geräte ohne App erfasst und analysiert werden können. Mit serverseitigen Installationen sind Asset-Tracking, Laufweganalysen und Sicherheitslösungen umsetzbar.

Die Bluetooth-Technologie ist an sich nicht neu. Doch erst in letzter Zeit ergeben sich mit der energiesparenden Bluetooth-Variante BLE (Bluetooth Low Energy) erweiterte Einsatzmöglichkeiten. Bluetooth Beacons sind relativ günstig (ca. drei bis 30 Euro), können bis zu zwei Jahre mit einer Knopfzelle oder über zehn Jahre mit größeren Batterien betrieben werden und haben eine Reichweite von bis zu 30 Metern. Die Genauigkeit liegt bei einem bis drei Metern. Zur Positionsbestimmung des mobilen Geräts ist die Verbindung zu mehrere Beacons notwendig, aus deren Signalen mittels Fingerprinting- oder Triangulations-Verfahren der Standort berechnet wird.

Viele Hausverwalter z.B. für Messegelände oder Einkaufszentren geben eine beträchtliche Menge Geld aus, um Hunderte von Beacons zu installieren und zu warten. Diese senden Bluetooth-Signale an die Smartphones der Besucher. Die Signale werden von jedem Smartphone (d.h. von jedem Smartphone bei dem Bluetooth aktiviert ist) gelesen und helfen, jede Person auf einer hinterlegten Karte zu positionieren. Algorithmen z.B. einer Indoor-Navigationsanwendung zeigen damit eine Route zum gewünschten Geschäft oder Ziel auf. Je nach Anwendungsfall kann die Anzahl der installierten Beacons von 50 für kleinere Installationen bis hin zu 1.500 Beacons für große Eventausstellungen reichen.

Es ist daher die Aufgabe der vorliegenden Erfindung, eine Anordnung und ein Verfahren für eine Indoor-Positionsbestimmung bereitzustellen, um die Anzahl der installierten Beacons gering zu halten.

Die Aufgabe wird gelöst durch eine Anordnung zur Positionsbestimmung eines mobilen Kommunikationsendgerätes,
wobei eine ortsfeste Referenz-Funkbake (Referenz-Beacon) eingerichtet ist, in Kollaboration mit entsprechend eingerichteten mobilen Kommunikationsendgeräten, die sich in Funkreichweite der ortsfesten Referenz-Funkbake befinden, deren Position zu bestimmen,
wobei ein weiteres, sich nicht in der Funkreichweite der ortsfesten Referenz-Funkbake befindliches mobiles Kommunikationsendgerät eingerichtet ist zur Kollaboration mit den mobilen Kommunikationsendgeräten, die sich in Funkreichweite der ortsfesten Referenz-Funkbake befinden, und
wobei basierend auf deren jeweiligen bestimmten Position der in Funkreichweite der ortsfesten Referenz-Funkbake befindlichen mobilen Kommunikationsendgeräten die Position des weiteren mobilen Kommunikationsendgerätes bestimmt wird.

Eine Positionsbestimmung mittels GPS funktioniert in Innenräumen nicht oder nicht zuverlässig. Die Positionsbestimmung von mobilen Kommunikationsendgeräten (z.B. Smartphone) in Gebäuden erfolgt mit Vorteil basierend auf Referenz-Funkbaken (Referenz-Beacon). Mit Vorteil basieren die Referenz-Funkbaken auf Bluetooth Low Energy (BLE). Bluetooth Low Energy (BLE) ermöglicht eine lange Laufzeit über Jahre (ca. 8-10 Jahre) hinweg, ohne einen notwendigen Batteriewechsel. Prinzipiell können Referenz-Funkbaken auch an ein Stromnetz angeschlossen werden. Als Bluetooth Low Energy Beacons können z.B. die Typen Eddystone von Google oder iBeacons von Apple verwendet werden. Jede Referenz-Funkbake ist zur Identifikation mit einer Kennung versehen (Universally Unique Identifier (UUID)). Die Funk-Reichweite einer Referenz-Funkbake kann bis zu 30 Meter betragen. D.h. im Umkreis von 30 Metern um eine Referenz-Funkbake können deren Bluetooth-Funksignale von einem mobilen Kommunikationsendgerät empfangen werden. Mobile Kommunikationsendgeräte, die entsprechend eingerichtet sind (z.B. mit einer entsprechenden App) können die Bluetooth-Signale (z.B. Bluetooth 4.0 oder Bluetooth 5.1) von im Gebäude installierten Referenz-Funkbaken (bzw. Referenz-Beacons) empfangen und nutzen die Messung der Signalstärke und/oder der Signalrichtung zur Positionsbestimmung. Empfängt ein mobiles Kommunikationsendgerät die Signale von mindestens drei Referenz-Funkbaken so lässt sich z. B. durch Trilateration oder durch das Fingerprinting-Verfahren die Position des mobilen Kommunikationsendgerätes im zweidimensionalen Raum errechnen. Zur Bestimmung der Position des mobilen Kommunikationsendgerätes im dreidimensionalen Raum sind die Signale von vier Referenz-Funkbaken erforderlich.

Die Kollaboration ist z.B. durch geeignete Kommunikationsmittel (z.B. für einen Datentransfer, Datenaustausch) implementiert und/oder durch geeignete Groupware.

Die vorliegende Erfindung ermöglicht es u.a. die Anzahl der für eine, insbesondere flächendeckende, Positionsbestimmung in einem Gebäude benötigten ortsfesten Referenz-Funkbaken zu reduzieren. Dies erspart Aufwand und Kosten.

Eine erste vorteilhafte Ausgestaltung der Erfindung liegt darin, dass die ortsfeste Referenz-Funkbake (Referenz-Beacon) eingerichtet ist, in Kollaboration mit entsprechend eingerichteten mobilen Kommunikationsendgeräten, die sich in Funkreichweite der Referenz-Funkbake befinden, über Triangulation und/oder über Messung von Signalstärken und/oder Signallaufzeiten deren Position zu bestimmen. Dazu sind die mobilen Kommunikationsendgeräte jeweils eingerichtet, die Bluetooth-Signale der ortsfesten Referenz-Funkbake zu empfangen. Weiterhin sind die mobilen Kommunikationsendgeräte jeweils dazu eingerichtet untereinander Bluetooth-Signale zu senden und zu empfangen. Weiterhin sind die mobilen Kommunikationsendgeräte jeweils dazu eingerichtet untereinander als Funkbake zu agieren und basierend auf der Messung von Signalstärken und/oder der Signalrichtung ihre jeweilige Position zu bestimmen. Mit Vorteil sind die mobilen Kommunikationsendgeräte dazu mit einer entsprechenden App ausgestattet. Optional und/oder zusätzlich können auch Angel of Arrival (AoA) und/oder Time of Arrival (ToA) - Informationen zur Positionsbestimmung ausgewertet werden.

Eine weitere vorteilhafte Ausgestaltung der Erfindung liegt darin, dass die Position des weiteren mobilen Kommunikationsendgerätes bestimmt wird, basierend auf der jeweiligen bestimmten Position der in Funkreichweite der ortsfesten Referenz-Funkbake befindlichen mobilen Kommunikationsendgeräte, über Triangulation und/oder über Messung von Signalstärken und/oder Signallaufzeiten der entsprechenden mobilen Kommunikationsendgeräte. Die in Funkreichweite der ortsfesten Referenz-Funkbake befindlichen mobilen Kommunikationsendgeräte übernehmen dabei die Funktion einer Funkbake und senden jeweils Bluetooth-Signale und ihre momentane Position aus, die Empfänger, d.h. die Bluetooth-Signale empfangende mobilen Kommunikationsendgeräte, zur Positionsbestimmung verwenden können. Das weitere mobile Kommunikationsendgerät ist dabei eingerichtet, basierend auf der Messung von Bluetooth-Signalstärken und/oder von Bluetooth-Signalrichtungen die eigene Position zu bestimmen.

Eine weitere vorteilhafte Ausgestaltung der Erfindung liegt darin, dass das weitere mobile Kommunikationsendgerät fortan als weitere Funkbake für zusätzliche weitere mobile Kommunikationsendgeräte fungiert. In dem das weitere mobile Kommunikationsendgerät als weitere Funkbake fungiert, kann es entsprechende Bluetooth-Signale aussenden, die von den zusätzlichen weiteren mobilen Kommunikationsendgeräten empfangen und zur Positionsbestimmung verwendet werden können. Die zusätzlichen weiteren mobilen Kommunikationsendgeräte können sich dabei innerhalb oder ausserhalb der Funk-Reichweite der ortsfesten Referenz-Funkbake befinden. Die zusätzlichen weiteren mobilen Kommunikationsendgeräte sind eingerichtet, basierend auf der Messung von Bluetooth-Signalstärken und/oder von Bluetooth-Signalrichtungen die jeweils eigene Position zu bestimmen. Das weitere mobile Kommunikationsendgerät agiert somit fortan als mobile Funkbake, von mobilen Kommunikationsendgeräten zu deren Positionsbestimmung verwendet werden kann. Mobile Kommunikationsendgeräte die sich innerhalb der Funkreichweite der ortsfesten Referenz-Funkbake befinden, fungieren somit als Repeater für weitere mobile Kommunikationsendgeräte, die sich ausserhalb der Funkreichweite der ortsfesten Referenz-Funkbake befinden.

Die Aufgabe wird weiterhin gelöst durch ein Verfahren zur Positionsbestimmung eines mobilen Kommunikationsendgerätes, wobei eine ortsfeste Referenz-Funkbake (Referenz-Beacon) bereitgestellt wird, die eingerichtet ist, in Kollaboration mit entsprechend eingerichteten mobilen Kommunikationsendgeräten, die sich in Funkreichweite der ortsfesten Referenz-Funkbake befinden, deren Position zu bestimmen,
wobei ein weiteres, sich nicht in der Funkreichweite der ortsfesten Referenz-Funkbake befindliches mobiles Kommunikationsendgerät eingerichtet ist zur Kollaboration mit den mobilen Kommunikationsendgeräten, die sich in Funkreichweite der ortsfesten Referenz-Funkbake befinden, und
wobei basierend auf deren jeweiligen bestimmten Position der in Funkreichweite der ortsfesten Referenz-Funkbake befindlichen mobilen Kommunikationsendgeräten die Position des weiteren mobilen Kommunikationsendgerätes bestimmt wird. Die ortsfeste Referenz-Funkbake (Referenz-Beacon) sendet mit Vorteil Bluetooth-Funksignale aus, die von den mobilen Kommunikationsendgeräten (z.B. Smartphones, Computer-Tablets) empfangen und zur Positionsbestimmung ausgewertet werden. Dazu sind die mobilen Kommunikationsendgeräte jeweils eingerichtet, Bluetooth-Signale der ortsfesten Referenz-Funkbake zu empfangen. Weiterhin sind die mobilen Kommunikationsendgeräte jeweils dazu eingerichtet untereinander Bluetooth-Signale zu senden und zu empfangen. Weiterhin sind die mobilen Kommunikationsendgeräte jeweils dazu eingerichtet untereinander als Funkbake zur Positionsbestimmung zu agieren und basierend auf der Messung von Signalstärken und/oder der Signalrichtung ihre jeweilige Position zu bestimmen. Mit Vorteil sind die mobilen Kommunikationsendgeräte dazu mit einer entsprechenden App ausgestattet. Das vorliegende Verfahren ermöglicht es u.a. die Anzahl der für eine, insbesondere flächendeckende, Positionsbestimmung in einem Gebäude benötigten ortsfesten Referenz-Funkbaken zu reduzieren.

Die Aufgabe wird weiterhin gelöst durch eine Anordnung zur Positionsbestimmung eines mobilen Kommunikationsendgerätes, die Anordnung umfassend:
eine serverbasierte Plattform zur Kollaboration von entsprechend eingerichteten und bei der serverbasierten Plattform registrierten mobilen Kommunikationsendgeräten;
eine erste ortsfeste Referenz-Funkbake, wobei die erste ortsfeste Referenz-Funkbake zur Kollaboration mit der serverbasierten Plattform eingerichtet ist, wobei in der serverbasierten Plattform die Ortsposition und eine Identifikationskennung der ersten Referenz-Funkbake hinterlegt sind;
wobei die erste Referenz-Funkbake dazu eingerichtet ist, ihre Identifikationsnummer an mobile Kommunikationsendgeräte zu übertragen, die sich in Funk-Reichweite zur ersten Referenz-Funkbake befinden,
wobei die in der Funk-Reichweite der ersten Referenz-Funkbake (z.B. iBeacon von Apple oder Eddystone-Beacon von Google) befindlichen mobilen Kommunikationsendgeräte in Kollaboration mit der serverbasierten Plattform und der ersten Referenz-Funkbake ihre jeweilige Position bestimmen;
wobei ein weiteres mobiles Kommunikationsendgerät, in dessen Funk-Reichweite sich drei mobile Kommunikationsendgeräte befinden, deren Position bekannt ist, seine Position über Triangulation und/oder Trilateration mit diesen drei mobilen Kommunikationsendgeräten bestimmt, wobei das weitere mobile Kommunikationsendgerät sich nicht in der Reichweite der ersten Referenz-Funkbake befindet.

Die vorliegende Anordnung ermöglicht es u.a. die Anzahl der für eine, insbesondere flächendeckende, Positionsbestimmung in einem Gebäude benötigten ortsfesten Referenz-Funkbaken zu reduzieren. Dies erspart Aufwand und Kosten bei der Errichtung und Installation von Positionsbestimmungssystemen in Gebäuden (IPS, Indoor Positioning System). Mit Vorteil handelt es sich bei der serverbasierten Plattform um eine Cloud-basierte Plattform, mit entsprechender Cloud-Infrastruktur, umfassend geeignete Prozessorleistung, Speicher, Software für die Kollaboration, und Kommunikationsmechanismen (z.B. Funkempfänger und -sender) zur Kommunikation mit den mobilen Kommunikationsendgeräten (z.B. Smartphone) und der ortsfesten Referenz-Funkbake. Mit Vorteil ist die serverbasierte Plattform als Plattform-Ecosystem realisiert. Mit Vorteil melden sich die mobilen Kommunikationsendgeräte mit einer entsprechenden App bei der serverbasierten Plattform bzw. beim Plattform-Ecosystem an, um sich zu registrieren. Mit Vorteil sendet die erste Referenz-Funkbake Bluetooth-Signale aus, die von den mobilen Kommunikationsendgeräten in der Funk-Reichweite der ortsfesten Referenz-Funkbake empfangen und ausgewertet werden. Die Ortsposition der ortsfesten Referenz-Funkbake, d.h. ihre Positionierung (Installationsort) im Gebäude kann den mobilen Kommunikationsendgeräten, die sich in der Funk-Reichweite der ortsfesten Referenz-Funkbake befinden, über Funk von der Referenz-Funkbake mitgeteilt werden, oder über entsprechende Kollaboration mit der serverbasierten Plattform. Mit Vorteil ist in der serverbasierten Plattform (z.B. in einem entsprechenden Speichermedium) die Identifikation (Kennung) der ortsfesten Referenz-Funkbake (Universally Unique Identifier (UUID)) und ihr Verbauungsort (Position) im Gebäude hinterlegt.

In der Regel sendet die Referenz-Funkbake ihre UUID. Die Position wird dann mit Hilfe der serverbasierten Plattform bestimmt. Die mobilen Endgeräte bekommen von der serverbasierten Plattform eine "Fake"-UUID zugewiesen, welche die App als alternierende Funkbake erkennt und den anderen mobilen Endgeräten verfügbar macht. Die mobilen Endgeräte simulieren damit einen "Fake"-Beacon, dessen Position aber variable sein kann.

Ein "Fake"-Beacon ist somit eine nicht-ortsfeste (d.h. nicht im Gebäude verbaute) Funkbake. Ein "Fake"-Beacon sendet aber wie eine ortsfeste Referenz-Funkbake Signale (z.B. "Fake"-UUIDs aus, die zur Positionsbestimmung von mobilen Kommunikationsendgeräten in Verbindung mit der Sever-Plattform verwendet werden können.

Eine weitere vorteilhafte Ausgestaltung der Erfindung liegt darin, dass die ortsfeste Referenz-Funkbake (Referenz-Beacon) und die serverbasierte Plattform eingerichtet sind, in Kollaboration mit den entsprechend eingerichteten mobilen Kommunikationsendgeräten, die sich in Funkreichweite der Referenz-Funkbake befinden, über Triangulation und/oder über Messung von Signalstärken und/oder Signallaufzeiten deren jeweilige Position zu bestimmen. Dazu sind die mobilen Kommunikationsendgeräte jeweils eingerichtet, die Bluetooth-Signale der ortsfesten Referenz-Funkbake zu empfangen. Weiterhin sind die mobilen Kommunikationsendgeräte jeweils dazu eingerichtet untereinander Bluetooth-Signale zu senden und zu empfangen. Weiterhin sind die mobilen Kommunikationsendgeräte jeweils dazu eingerichtet untereinander als Funkbake zu agieren und basierend auf der Messung von Signalstärken und/oder der Signalrichtung ihre jeweilige Position zu bestimmen. Mit Vorteil sind die mobilen Kommunikationsendgeräte dazu mit einer entsprechenden App ausgestattet.

Eine weitere vorteilhafte Ausgestaltung der Erfindung liegt darin, dass das weitere mobile Kommunikationsendgerät, das sich nicht in der Funk-Reichweite der ersten ortsfesten Referenz-Funkbake befindet, und die zwei mobilen Kommunikationsendgeräte, die sich in der Funk-Reichweite des weiteren mobilen Kommunikationsendgerätes befinden, weiter eingerichtet sind, über Messung von Signalstärken und/oder Signallaufzeiten die Position des weiteren mobilen Kommunikationsendgerätes zu bestimmen. Somit kann die Position eines mobilen Kommunikationsendgerätes bestimmt werden, welches sich nicht in Funk-Reichweite einer ortsfesten Referenz-Funkbake befindet. Dadurch wird u.a. die Anzahl der für eine Positionsbestimmung in einem Gebäude benötigten ortsfesten Referenz-Funkbaken weiter reduziert.

Eine weitere vorteilhafte Ausgestaltung der Erfindung liegt darin, dass das weitere mobile Kommunikationsendgerät fortan als weitere Funkbake fungiert. Das weitere mobile Kommunikationsendgerät (z.B. Smartphone) ist eingerichtet Bluetooth-Signale zu senden, die von anderen mobilen Kommunikationsendgeräten empfangen und für deren jeweilige Positionsbestimmung ausgewertet werden können. Z.B. durch Auswertung von Signallaufzeiten und/oder Signalstärken. Optional und/oder zusätzlich können auch Angel of Arrival (AoA) und/oder Time of Arrival (ToA) - Informationen zur Positionsbestimmung ausgewertet werden. Bei der Verwendung von Bluetooth 5.1 kann auch die Richtung eines Funksignals bestimmt werden. Die aktuelle Ortsposition des weiteren mobilen Kommunikationsendgerätes steht damit fest. Die aktuelle Ortsposition des weiteren mobilen Kommunikationsendgerätes kann in der serverbasierten Plattform hinterlegt werden, z.B. über die entsprechend eingerichtete App. Mit Vorteil wird bei einer Ortsänderung des weiteren mobilen Kommunikationsendgerätes dessen aktuelle Ortsposition automatisch in der serverbasierten Plattform hinterlegt. Die aktuelle Ortsposition des weiteren mobilen Kommunikationsendgerätes kann den anderen mobilen Kommunikationsendgeräten aber auch durch Funkverbindung (z.B. Bluetooth) den anderen mobilen Kommunikationsendgeräten übermittelt werden. Das weitere mobile Kommunikationsendgerät welches als weitere Funkbake fungiert stellt seine "Fake"-UUID und seine alternierende Position (über Server) bereit. Basierend darauf können mobile Kommunikationsendgerät ihre jeweilige Position bestimmen.

Empfängt ein mobiles Kommunikationsendgerät die Signale von mindestens drei Funkbaken so lässt sich z. B. durch Trilateration oder durch das Fingerprinting-Verfahren die Position des mobilen Kommunikationsendgerätes im zweidimensionalen Raum errechnen. Zur Bestimmung der Position des mobilen Kommunikationsendgerätes im dreidimensionalen Raum sind die Signale von vier Funkbaken erforderlich. Bei den Funkbaken kann es sich dabei um ortsfeste, d.h. im Gebäude verbaute, Referenz-Funkbaken handeln, und/oder um mobile Kommunikationsendgeräte, die jeweils als weitere Funkbake fungieren, wobei sich ein mobilen Kommunikationsendgeräte innerhalb oder ausserhalb der Funkreichweite von ortsfesten Referenz-Funkbaken befinden kann.

Eine weitere vorteilhafte Ausgestaltung der Erfindung liegt darin, dass das weitere mobile Kommunikationsendgerät als weitere Funkbake für weitere mobile Kommunikationsendgeräte fungiert, die sich ausserhalb der Funk-Reichweite der ersten ortsfesten Referenz-Funkbake befinden. Dadurch kann in einem Gebäude u.a. eine grosse Funkabdeckung mit nur einem bzw. nur mit wenigen ortsfesten Referenz-Funkbaken erreicht werden. Dies erspart Aufwand und Kosten bei der Errichtung und Installation von Positionsbestimmungssystemen in Gebäuden (IPS, Indoor Positioning System), und im anschliessenden Betrieb/Service (Batterietausch). Das weitere mobile Kommunikationsendgerät welches als weitere Funkbake fungiert stellt seine "Fake"-UUID und seine alternierende Position (über Server) bereit. Basierend darauf können mobile Kommunikationsendgerät ihre jeweilige Position bestimmen.

Eine weitere vorteilhafte Ausgestaltung der Erfindung liegt darin, dass die Anordnung weitere ortsfeste Referenz-Funkbaken umfasst, wobei die weiteren ortsfesten Referenz-Funkbaken jeweils zur Kollaboration mit der serverbasierten Plattform eingerichtet sind, wobei in der serverbasierten Plattform die jeweilige Ortsposition und die jeweilige Identifikationskennung der weiteren ortsfesten Referenz-Funkbaken hinterlegt sind. Z.B. pro Stockwerk eine ortsfeste Referenz-Funkbake oder pro Gebäude in einem Campus eine ortsfeste Referenz-Funkbake oder pro Gebäudeabschnitt eine ortsfeste Referenz-Funkbake.

Eine weitere vorteilhafte Ausgestaltung der Erfindung liegt darin, dass die bei der serverbasierten Plattform registrierten mobilen Kommunikationsendgeräte ein Mesh-Netzwerk bilden. Die registrierten mobilen Kommunikationsendgeräte bilden ein drahtloses (wireless) Mesh-Netzwerk. Dies ermöglicht eine hohe Flächenabdeckung für das Positionsbestimmungssystem.

Die Aufgabe wird weiterhin gelöst durch eine Anordnung zur Positionsbestimmung eines mobilen Kommunikationsendgerätes, die Anordnung umfassend:
eine serverbasierte Plattform zur Kollaboration von entsprechend eingerichteten und bei der serverbasierten Plattform registrierten mobilen Kommunikationsendgeräten;
eine erste ortsfeste Referenz-Funkbake, wobei die erste ortsfeste Referenz-Funkbake zur Kollaboration mit der serverbasierten Plattform eingerichtet ist, wobei in der serverbasierten Plattform die Ortsposition und eine Identifikationskennung der ersten ortsfesten Referenz-Funkbake hinterlegt sind;
wobei die erste ortsfeste Referenz-Funkbake dazu eingerichtet ist, ihre Identifikationsnummer an mobile Kommunikationsendgeräte zu übertragen, die sich in Funk-Reichweite zur ersten ortsfesten Referenz-Funkbake befinden,
wobei die in der Funk-Reichweite der ersten ortsfesten Referenz-Funkbake befindlichen mobilen Kommunikationsendgeräte in Kollaboration mit der serverbasierten Plattform und der ersten ortsfesten Referenz-Funkbake ihre jeweilige Position bestimmen;
wobei ein weiteres, sich nicht in Funk-Reichweite der ersten ortsfesten Referenz-Funkbake befindliches mobiles Kommunikationsendgerät, seine Position über Triangulation und/oder Trilateration mit mobilen Kommunikationsendgeräten bestimmt, die sich in Funk-Reichweite zur ersten ortsfesten Referenz-Funkbake befinden, wobei das weitere mobile Kommunikationsendgerät fortan als weitere Funkbake für weitere mobile Kommunikationsendgeräte fungiert. In dem das weitere mobile Kommunikationsendgerät als weitere Funkbake fungiert, kann es entsprechende Bluetooth-Signale aussenden, die von den zusätzlichen weiteren mobilen Kommunikationsendgeräten empfangen und zur Positionsbestimmung verwendet werden können. Die zusätzlichen weiteren mobilen Kommunikationsendgeräte können sich dabei innerhalb oder ausserhalb der Funk-Reichweite der ortsfesten Referenz-Funkbake befinden. Die zusätzlichen weiteren mobilen Kommunikationsendgeräte sind eingerichtet, basierend auf der Messung von Bluetooth-Signalstärken und/oder von Bluetooth-Signalrichtungen die jeweils eigene Position zu bestimmen.

Eine weitere vorteilhafte Ausgestaltung der Erfindung liegt darin, dass das weitere mobile Kommunikationsendgerät als weitere Funkbake für weitere mobile Kommunikationsendgeräte fungiert, die sich ausserhalb der Funk-Reichweite der ersten ortsfesten Referenz-Funkbake befinden. Dadurch kann die Funktionsreichweitenabdeckung eines Positionsbestimmungssystemen in Gebäuden (IPS, Indoor Positioning System) vergrössert werden, ohne, dass weitere ortsfeste Referenz-Funkbaken installiert werden müssen. In der Regel sendet die ortsfeste Referenzfunkbake ihre UUID. Die Position wird dann mit Hilfe der serverbasierten Plattform bestimmt. Die mobilen Endgeräte bekommen von der serverbasierten Plattform eine "Fake"-UUID zugewiesen, welche die App als alternierende Funkbake erkennt und den anderen mobilen Endgeräten verfügbar macht. Die mobilen Endgeräte simulieren damit einen "Fake"-Beacon, dessen Position aber variable sein kann.

Eine weitere vorteilhafte Ausgestaltung der Erfindung liegt darin, dass die Anordnung weitere ortsfeste Referenz-Funkbaken umfasst, wobei die weiteren ortsfesten Referenz-Funkbaken jeweils zur Kollaboration mit der serverbasierten Plattform eingerichtet sind, wobei in der serverbasierten Plattform die jeweilige Ortsposition und die jeweilige Identifikationskennung der weiteren ortsfesten Referenz-Funkbaken hinterlegt sind. Z.B. pro Stockwerk eine ortsfeste Referenz-Funkbake oder pro Gebäude in einem Campus eine ortsfeste Referenz-Funkbake oder pro Gebäudeabschnitt eine ortsfeste Referenz-Funkbake.

Eine weitere vorteilhafte Ausgestaltung der Erfindung liegt darin, dass die bei der serverbasierten Plattform registrierten mobilen Kommunikationsendgeräte ein Mesh-Netzwerk bilden. Die registrierten mobilen Kommunikationsendgeräte bilden ein drahtloses (wireless) Mesh-Netzwerk. Dies ermöglicht eine hohe Flächenabdeckung für das Positionsbestimmungssystem.

Die Erfindung sowie vorteilhafte Ausführungen der vorliegenden Erfindung werden am Beispiel der nachfolgenden Figur erläutert. Dabei zeigt:
- FIG 1: ein Beispiel für die prinzipielle Funktionsweise einer Funkbake (Beacon),
- FIG 2: ein Beispiel für einen Plan für die Positionierung von Funkbaken in einem Gebäude,
- FIG 3: eine beispielhafte Anordnung zur Positionsbestimmung eines mobilen Kommunikationsendgerätes,
- FIG 4: ein erstes beispielhaftes Szenario zur Positionsbestimmung von mobilen Kommunikationsendgeräten,
- FIG 5: ein zweites beispielhaftes Szenario zur Positionsbestimmung von mobilen Kommunikationsendgeräten,
- FIG 6: ein drittes beispielhaftes Szenario zur Positionsbestimmung von mobilen Kommunikationsendgeräten,
- FIG 7: ein beispielhaftes Diagramm zur Darstellung der zeitlichen Veränderung von Distanz-Matrixen bezüglich der beispielhaften Szenarien gemäss der Figuren 4 bis 6,
- FIG 8: ein beispielhaftes Mesh-Netzwerk von mobilen Kommunikationsendgeräten, und
- FIG 9: ein beispielhaftes Flussdiagramm für ein Verfahren zur Positionsbestimmung eines mobilen Kommunikationsendgerätes.

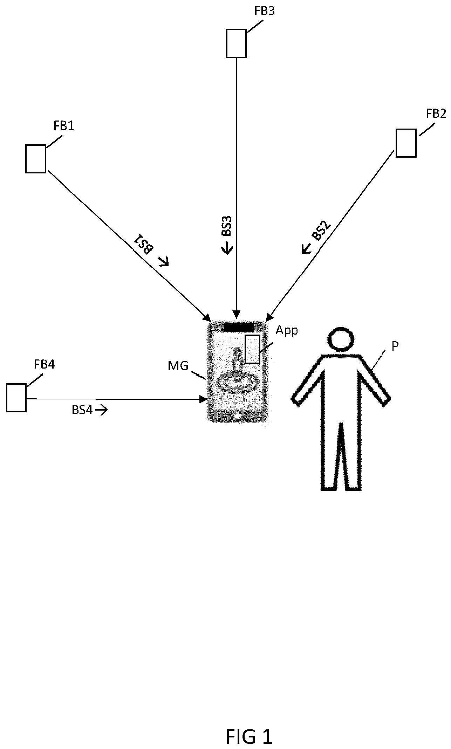

Figur 1 zeigt ein Beispiel für die prinzipielle Funktionsweise einer Funkbake FB1 - FB4 (z.B. iBeacon von Apple). Die Funkbaken FB1 - FB4 (Beacons) sind wenige Zentimeter kleine Sender, die in einem Gebäude montiert werden können und die nichts anderes tun als ein "Leuchtfeuer" (Funksignale) winziger Datenpakete BS1 - BS4 zu senden. Die Reichweite dieser Funksignale beträgt einige 10 Meter. Mit Vorteilen basieren die Funkbaken FB1 - FB4 auf der Funktechnik Bluetooth Low Energy (BLE). Dies garantiert eine lange Laufzeit bzw. Betriebszeit über mehrere Jahre, ohne, dass ein Batteriewechsel erforderlich ist. Prinzipiell können Funkbaken FB1 - FB4 (Beacons) auch an eine Stromversorgung angeschlossen werden. Die Funkbaken FB1 - FB4 können z.B. auf Bluetooth 4.0 oder Bluetooth 5.1 basieren.

Die Funkbaken FB1 - FB4 senden jeweils kontinuierlich jeweilige Broadcast-Funksignale in Form von Datenpaketen BS1 - BS4 aus, die von einem mobilen Kommunikationsendgerät MG eines Benutzers P empfangen werden, wenn sich das mobile Kommunikations-endgerät MG (z.B. ein Smartphone) in der Funkreichweite der Funkbaken FB1 - FB4 befindet. Dazu ist das mobile Kommunikationsendgerät MG mit einem Bluetooth-Sender/-Empfänger und entsprechender Software (z.B. eine entsprechende App) zur Verarbeitung der Funksignale BS1 - BS4 ausgestattet.

Ein Funksignal BS1 - BS4 umfasst im Wesentlichen folgende Informationen:
- UUID (Universally Unique Identifier), zur eindeutigen Identifizierung des Senders FB1, FB2.
- MajorID, MinorID, zur Bestimmung von Haupt- und Unterbereichen einer UUID.
- RSSI (Received Signal Strength Indicator), ein Indikator für die Stärke des empfangenen Signals.
- TxPower, die TxPower ist die gemessene Leistung in einem 1 Meter Entfernung zu einem Empfänger.

Mit dem TxPower-Signal und dem RSSS kann die Entfernung eines mobilen Kommunikationsendgerätes MG zu einer der Funkbaken FB1 - FB4 berechnet werden. Die Entfernung eines mobilen Kommunikationsendgerätes MG zu einer der Funkbaken FB1 - FB4 kann auch durch Auswertung der Laufzeit der Signale BS1 - BS4 berechnet werden. Mit Vorteil erfolgt die Berechnung der Entfernung eines mobilen Kommunikationsendgerätes MG zu einer der Funkbaken FB1 - FB4 basierend auf der Auswertung der jeweiligen Signalstärke (RSSI) und der jeweiligen Signallaufzeit der Signale BS1 - BS4.

Empfängt ein mobiles Kommunikationsendgerät MG z.B. die Signale BS1 - BS3 von mindestens drei Referenz-Funkbaken, z.B. FB1 - FB3 so lässt sich z. B. durch Trilateration oder durch das Fingerprinting-Verfahren die Position des mobilen Kommunikationsend-gerätes MG im zweidimensionalen Raum errechnen. Zur Bestimmung der Position des mobilen Kommunikationsendgerätes MG im dreidimensionalen Raum sind die Signale BS1 - BS4 von vier Referenz-Funkbaken FB1 - FB4 erforderlich.

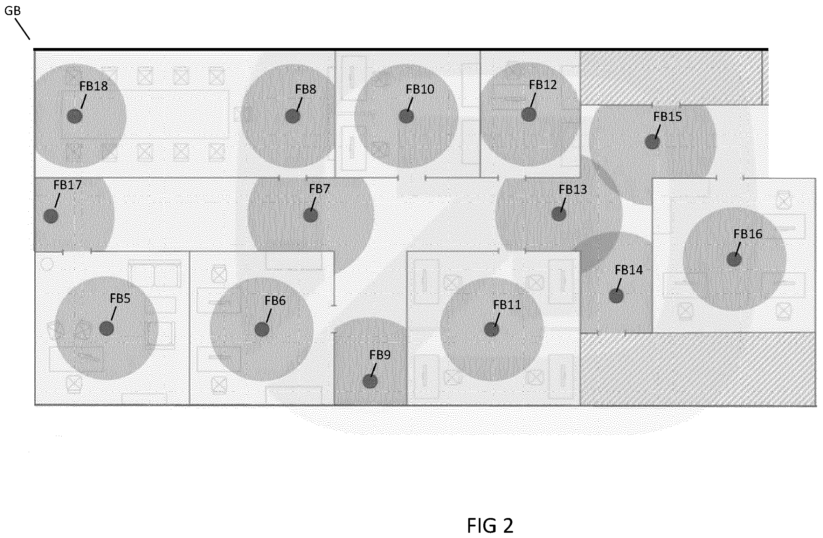

Figur 2 zeigt ein Beispiel für einen Plan für die Positionierung von Funkbaken FB5 - FB18 in einem Gebäude GB. Die Kreise um die Funkbaken FB5 - FB18 zeigen an, welche Fläche von den jeweiligen Funkbaken FB5 - FB18 abgedeckt wird. Wenn sich ein mobiles Kommunikationsendgerät (z.B. Smartphone) in einer dieser abgedeckten Flächen befindet, empfängt es von der jeweiligen Funkbake FB5 - FB18 ein jeweiliges Funksignal. Die Darstellung gemäss Figur 2 zeigt, dass für eine grosse bzw. vollständige Abdeckung viele Funkbaken FB5 - FB18 benötigt werden.

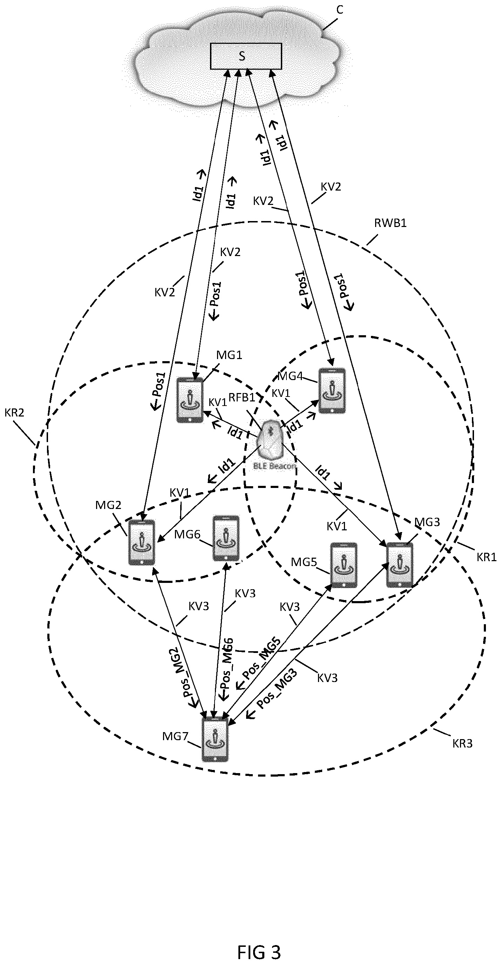

Figur 3 zeigt eine beispielhafte Anordnung zur Positionsbestimmung eines mobilen Kommunikationsendgerätes MG1 - MG7. Die ortsfeste Referenz-Funkbake RFB1 (z.B. ein an einem definierten Ort in einem Gebäude verbauter Referenz-Beacon) sendet Signale aus. Diese Signale umfassen eine eindeutige Identifikationskennung Id1, die der ortsfesten Referenz-Funkbake RFB1 zugeordnet ist. Über die Identifikationskennung Id1 ist eine Referenz-Funkbake RFB1 eindeutig identifizierbar. Die mobilen Kommunikationsendgeräte MG1 - MG6, die sich innerhalb der Funkreichweite RWB1 der ortsfesten Referenz-Funkbake RFB1 befinden, empfangen die Signale (z.B. Funksignale) und damit die Identifikationskennung Id1 der Referenz-Funkbake RFB1 über eine geeignete Kommunikationsverbindung KV1. Mit Vorteil handelt es sich bei der Kommunikationsverbindung KV1 um eine Bluetooth-Verbindung (z.B. BLE (Bluetooth Low Energy), Bluetooth 4.0 oder Bluetooth 5.1). Die mobilen Kommunikationsendgeräte MG1 - MG7 sind entsprechend eingerichtet für eine Kommunikation über Bluetooth (z.B. Bluetooth-App und geeignete Bluetooth-Sende/Empfangs-Einrichtung.

Die mobilen Kommunikationsendgeräte MG1 - MG6 können über eine geeignete Kommunikationsverbindung KV2 mit einem Server S kommunizieren. Bei der Kommunikationsverbindung KV2 kann es sich z.B. um eine WLAN-Verbindung oder um eine geeignete Mobilfunkverbindung (z.B. 5G, UMTS, LTE) handeln. Im Server S ist die Identifikationskennung Id1 der Referenz-Funkbake RFB1 hinterlegt, sowie die Ortsposition Pos1 (physikalischer Verbauungsort im Gebäude) der Referenz-Funkbake RFB1 mit der Identifikationskennung Id1. Referenz-Funkbake RFB1 kann z.B. auf Bluetooth Low Energy (BLE) oder auf Eddystone-Technologie basieren. Mit Vorteil kann auch das mobile Kommunikationsendgerät MG7 mit dem Server S kommunizieren, z.B. über WLAN oder mobile Daten (z.B. GSM, UMTS, 5G).

Die mobilen Kommunikationsendgeräte MG1 - MG6, die sich innerhalb der Funkreichweite RWB1 der ortsfesten Referenz-Funkbake RFB1 befinden, senden über die jeweilige Kommunikationsverbindung KV2 die Identifikationskennung Id1 der Referenz-Funkbake RFB1 an den Server S und erhalten vom Server S die, der Identifikationskennung Id1 zugeordnete Ortsposition Pos1 der Referenz-Funkbake RFB1. Mit Vorteil ist der Server S in einer Cloudinfrastruktur realisiert. Die mobilen Kommunikationsendgeräte MG1 - MG6, die sich innerhalb der Funkreichweite RWB1 der ortsfesten Referenz-Funkbake RFB1 befinden, können basierend auf der Ortsposition Pos1 der Referenz-Funkbake RFB1 und durch Triangulation und/oder entsprechender Funksignalmessung und -auswertung in Kollaboration mit mobilen Kommunikationsendgeräten MG1 - MG6, die sich innerhalb der Funkreichweite RWB1 der ortsfesten Referenz-Funkbake RFB1 befinden, ihre jeweilige Position bestimmen.

Der Übersichtlichkeit halber sind in Figur 3 für die mobilen Kommunikationsendgeräte MG5 und MG6 die die Kommunikationsverbindungen und die Kommunikation mit dem Server S bzw. der Referenz-Funkbake RFB1 nicht dargestellt.

Mobile Kommunikationsendgeräte MG1 - MG7, die sich in einer Kommunikationsregion KR1 - KR3 befinden, z.B. innerhalb der Bluetooth-Signalreichweite zueinander und in einer WLAN-Verbindung zum Server S, können basierend auf der Ortsposition Pos1 der Referenz-Funkbake RFB1 und Auswertung der von der Referenz-Funkbake RFB1 empfangenen Signale (z.B. die entsprechende UUID-Kennung), ihre eigene Position bestimmen. Die mobilen Kommunikationsendgeräte MG1 - MG7 sind dazu eingerichtet, die Signalstärken und/oder die Signallaufzeiten (TOA, Time of Arrival bzw. TDOA, Time Difference of Arrival, bzw. AoA, Angle of Arrival) der von der Referenz-Funkbake RFB1 und zu den in der Kommunikationsregion befindlichen mobilen Kommunikationsendgeräte (z.B. Smartphones) empfangenen Signale auszuwerten, z.B. Auswertung der gemessenen RSSI-Pegel und Signalstärken (RSSI steht für Received Signal Strength Indication).

Die Darstellung gemäss Figur 3 zeigt drei beispielhafte Kommunikationsregionen KR1 - KR3. In der beispielhaften Kommunikationsregion KR1 befinden sich die mobilen Kommunikationsendgeräte MG3, MG4 und MG5 sowie die Referenz-Funkbake RFB1. In der beispielhaften Kommunikationsregion KR2 befinden sich die mobilen Kommunikationsendgeräte MG1, MG2 und MG6, sowie die Referenz-Funkbake RFB1. In der beispielhaften Kommunikationsregion KR3 befinden sich die mobilen Kommunikationsendgeräte MG2, MG6, MG3, MG5, sowie das weitere mobile Kommunikationsendgerät MG7. Mobile Kommunikationsendgeräte (z.B. Smartphones) können über geeignete Kommunikationsverbindungen (z.B. WLAN, Bluetooth, oder Mobiler Datenfunk (z.B. LTE, 5G) miteinander kommunizieren und/oder kollaborieren (z.B. wenn sie in einer gemeinsamen Kollaborationsplattform angemeldet sind). Das weitere mobile Kommunikationsendgerät MG7, welches sich nicht in der Funk-Reichweite RWB1 der Referenz-Funkbake RFB1 befindet, kann basierend auf den Positionsdaten Pos_MG2, Pos_MG3, Pos_MG5, Pos_MG6 der mobilen Kommunikationsendgeräte MG2, MG3, MG5, MG6 und entsprechender Triangulation, seine eigene Position bestimmen, obwohl es mit der ortsfesten Referenz-Funkbake RFB1 nicht in Funkverbindung steht, d.h. ausserhalb der Funk-Reichweite RWB1 der Referenz-Funkbake RFB1 ist. Die Positionsdaten Pos_MG2, Pos_MG3, Pos_MG5, Pos_MG6 der mobilen Kommunikationsendgeräte MG2, MG3, MG5, MG6 können vom Server S für die Kommunikationsendgeräte MG1 - MG6 gespeichert, gepflegt und für die jeweiligen Kommunikationsendgeräte MG1 - MG6 über die entsprechende Kommunikationsverbindung bereitgestellt werden. Im Server S können z.B. in einem entsprechenden Speichermedium (z.B. Liste, Datenbank) für die Kommunikationsendgeräte MG1 - MG6 jeweilige Identifizierungen (Kennungen, z.B. "Fake"-UUIDs oder virtuelle UUIDs) hinterlegt sein, denen die jeweilige Positionsinformation eines jeweiligen Kommunikationsendgerätes MG1 - MG6 zugeordnet ist. Die Positionsdaten Pos_MG2, Pos_MG3, Pos_MG5, Pos_MG6 der mobilen Kommunikationsendgeräte MG2, MG3, MG5, MG6 können aber auch in den jeweiligen Kommunikationsendgeräten MG1 - MG6 selbst bestimmt, gepflegt und gespeichert werden.

Das weitere mobile Kommunikationsendgerät MG7 erhält über eine geeignete Kommunikationsverbindung KV3 (z.B. Mobilfunkverbindung; z.B. LTE, UMTS; WLAN) die Positionsdaten Pos_MG2, Pos_MG3, Pos_MG5, Pos_MG6 der mobilen Kommunikationsendgeräte MG2, MG3, MG5, MG6.

Prinzipiell kann das weitere mobile Kommunikationsendgerät MG7 auch über eine geeignete Kommunikationsverbindung zum Server S (z.B. Mobilfunkverbindung; z.B. LTE, UMTS; WLAN) die Positionsdaten Pos_MG2, Pos_MG3, Pos_MG5, Pos_MG6 der mobilen Kommunikationsendgeräte MG2, MG3, MG5, MG6 erhalten.

Empfängt ein mobiles Kommunikationsendgerät MG1 - MG7 die Signale von mindestens drei mobilen Kommunikationsendgeräten MG1 - MG7 bzw. von zwei mobilen Kommunikationsendgeräten und einer Referenz-Funkbake RFB1 so lässt sich z. B. durch Trilateration und/oder Triangulation und/oder durch das Fingerprinting-Verfahren die Position des jeweiligen mobilen Kommunikationsendgerätes im zweidimensionalen Raum errechnen. Zur Bestimmung der Position eines mobilen Kommunikationsendgerätes im dreidimensionalen Raum sind die Signale von vier mobilen Kommunikationsendgeräten MG1 - MG7 bzw. von drei mobilen Kommunikationsendgeräten und einer Referenz-Funkbake RFB1 erforderlich.

Die Verarbeitungsintelligenz (Hardware, Software) zur Positionsbestimmung (z.B. Trilateration, Triangulation, Fingerprinting) kann sich im Server befinden. Optional kann sich die Verarbeitungsintelligenz (Hardware, Software) zur Positionsbestimmung (z.B. Trilateration, Triangulation, Fingerprinting) im Server und in den beteiligten Kommunikationsendgeräten befinden. Optional kann sich die Verarbeitungsintelligenz (Hardware, Software) zur Positionsbestimmung (z.B. Trilateration, Triangulation, Fingerprinting) in den Kommunikationsendgeräten befinden.

Mit Vorteil sind der Server S bzw. die serverbasierte Plattform S eingerichtet, die Ortsposition von verbauten Referenz-Funkbaken RFB1 durch Georeferenzierung zu bestimmen.

### Erste vorteilhafte Ausgestaltung der Erfindung für eine Anordnung:

Anordnung zur Positionsbestimmung eines mobilen Kommunikationsendgerätes MG1 - MG7,
wobei eine ortsfeste Referenz-Funkbake (Referenz-Beacon) RFB1 eingerichtet ist, in Kollaboration mit entsprechend eingerichteten mobilen Kommunikationsendgeräten MG1 - MG6, die sich in Funkreichweite RWB1 der ortsfesten Referenz-Funkbake RFB1 befinden, deren Position zu bestimmen,
wobei ein weiteres, sich nicht in der Funkreichweite RWB1 der ortsfesten Referenz-Funkbake RFB1 befindliches mobiles Kommunikationsendgerät MG7 eingerichtet ist zur Kollaboration mit den mobilen Kommunikationsendgeräten MG1 - MG6, die sich in Funkreichweite RWB1 der ortsfesten Referenz-Funkbake RFB1 befinden, und
wobei basierend auf deren jeweiligen bestimmten Position der in Funkreichweite RWB1 der ortsfesten Referenz-Funkbake RFB1 befindlichen mobilen Kommunikationsendgeräten MG1 - MG6 die Position des weiteren mobilen Kommunikationsendgerätes MG7 bestimmt wird.

Eine vorteilhafte Ausgestaltung liegt darin, dass die ortsfeste Referenz-Funkbake (Referenz-Beacon) RFB1 eingerichtet ist, in Kollaboration mit entsprechend eingerichteten mobilen Kommunikationsendgeräten MG1 - MG6 , die sich in Funkreichweite RWB1 der Referenz-Funkbake RFB1 befinden, über Triangulation und/oder über Messung von Signalstärken und/oder Signallaufzeiten deren Position zu bestimmen.

Eine vorteilhafte Ausgestaltung liegt darin, dass die Position des weiteren mobilen Kommunikationsendgerätes MG7 bestimmt wird, basierend auf der jeweiligen bestimmten Position der in Funkreichweite RWB1 der ortsfesten Referenz-Funkbake RFB1 befindlichen mobilen Kommunikationsendgeräte MG1 - MG6, über Triangulation und/oder über Messung von Signalstärken und/oder Signallaufzeiten der entsprechenden mobilen Kommunikationsendgeräte MG1 - MG7.

Eine vorteilhafte Ausgestaltung liegt darin, dass das weitere mobile Kommunikationsendgerät MG7 fortan als weitere Referenz-Funkbake für weitere mobile Kommunikationsendgeräte fungiert.

### Zweite vorteilhafte Ausgestaltung der Erfindung für eine Anordnung:

Anordnung zur Positionsbestimmung eines mobilen Kommunikationsendgerätes MG1 - MG7, die Anordnung umfassend:
eine serverbasierte Plattform S zur Kollaboration von entsprechend eingerichteten und bei der serverbasierten Plattform S registrierten mobilen Kommunikationsendgeräten MG1 - MG6;
eine erste ortsfeste Referenz-Funkbake RFB1, wobei die erste ortsfeste Referenz-Funkbake RFB1 zur Kollaboration mit der serverbasierten Plattform S eingerichtet ist, wobei in der serverbasierten Plattform S die Ortsposition Pos1 und eine Identifikationskennung Id der ersten Referenz-Funkbake RFB1 hinterlegt sind;
wobei die erste Referenz-Funkbake RFB1 dazu eingerichtet ist, ihre Identifikationsnummer Id an mobile Kommunikationsendgeräte MG1 - MG6 zu übertragen, die sich in Funk-Reichweite RWB1 zur ersten Referenz-Funkbake RFB1 befinden,
wobei die in der Funk-Reichweite RWB1 der ersten Referenz-Funkbake RFB1 befindlichen mobilen Kommunikationsendgeräte MG1 - MG6 in Kollaboration mit der serverbasierten Plattform S und der ersten Referenz-Funkbake RFB1 ihre jeweilige Position bestimmen;
wobei ein weiteres mobiles Kommunikationsendgerät MG7, in dessen Funkreichweite sich drei mobile Kommunikationsendgeräte befinden, deren Position bekannt ist, seine Position über Triangulation mit diesen drei mobilen Kommunikationsendgeräten bestimmt, wobei das weitere mobile Kommunikationsendgerät sich nicht in der Funk-Reichweite RWB1 der ersten Referenz-Funkbake RFB1 befindet.

Mit Vorteil ist die serverbasierte Plattform S in einer Cloud-Infrastruktur C realisiert, mit entsprechenden Prozessor-, Speicher-, und Kommunikationsmittel. Mit Vorteil melden sich die mobilen Kommunikationsendgeräte MG1 - MG6 bei der serverbasierte Plattform S über eine entsprechende App an. Die mobilen Kommunikationsendgeräte MG1 - MG6 sind dadurch zur Kollaboration mit der Referenz-Funkbake RFB1 und der serverbasierten Plattform S eingerichtet. Die serverbasierte Plattform S kann auf einem Cloudserver realisiert sein.

Eine vorteilhafte Ausgestaltung liegt darin, dass die ortsfeste Referenz-Funkbake (Referenz-Beacon) RFB1 und die serverbasierte Plattform S eingerichtet sind, in Kollaboration mit den entsprechend eingerichteten mobilen Kommunikationsendgeräten MG1 - MG6, die sich in Funkreichweite der Referenz-Funkbake RFB1 befinden, über Triangulation und/oder über Messung von Signalstärken und/oder Signallaufzeiten deren jeweilige Position zu bestimmen.

Eine vorteilhafte Ausgestaltung liegt darin, dass das weitere mobile Kommunikationsendgerät MG7, das sich nicht in der Funk-Reichweite RWB1 der ersten Referenz-Funkbake RFB1 befindet, und die mobilen Kommunikationsendgeräte MG2, MG6, MG5, MG3, die sich in der Funk-Reichweite KR3 des weiteren mobilen Kommunikationsendgerätes MG7 befinden, weiter eingerichtet sind, über Messung von Signalstärken und/oder Signallaufzeiten die Position des weiteren mobilen Kommunikationsendgerätes MG7 zu bestimmen. Bei der Funk-Reichweite KR3 handelt es sich z.B. um die Funk-Reichweite einer gemeinsamen Funkzelle.

Eine vorteilhafte Ausgestaltung liegt darin, dass das weitere mobile Kommunikationsendgerät MG7 fortan als weitere Referenz-Funkbake fungiert. Dadurch kann die Anzahl der ortsfesten Referenz-Funkbaken in einem Gebäude reduziert werden.

Eine vorteilhafte Ausgestaltung liegt darin, dass das weitere mobile Kommunikationsendgerät MG7 als weitere Referenz-Funkbake für weitere mobile Kommunikationsendgeräte fungiert, die sich ausserhalb der Funk-Reichweite RWB1 der ersten ortsfesten Referenz-Funkbake RFB1 befinden. Auch dadurch kann die Anzahl der ortsfesten Referenz-Funkbaken in einem Gebäude reduziert werden.

Eine vorteilhafte Ausgestaltung liegt darin, dass die Anordnung weitere ortsfeste Referenz-Funkbaken umfasst, wobei die weiteren ortsfesten Referenz-Funkbaken jeweils zur Kollaboration mit der serverbasierten Plattform S eingerichtet sind, wobei in der serverbasierten Plattform S die jeweilige Ortsposition und die jeweilige Identifikationskennung der weiteren Referenz-Funkbaken hinterlegt sind. Die weiteren ortsfesten Referenz-Funkbaken können sich z.B. in weiteren Stockwerken oder weiteren Gebäudeteilen befinden.

Eine vorteilhafte Ausgestaltung liegt darin, dass das weitere mobile Kommunikationsendgerät MG7, das sich nicht in der Funk-Reichweite RWB1 der ersten ortsfesten Referenz-Funkbake RFB1 befindet, nicht bei der serverbasierten Plattform S registriert ist. Dies erhöht die Flexibilität für einen Benutzer.

Eine vorteilhafte Ausgestaltung liegt darin, dass die bei der serverbasierten Plattform S registrierten mobilen Kommunikationsendgeräte MG1 - MG6 ein Mesh-Netzwerk bilden. Dadurch kann ohne weitere Infrastruktur für ein IPS (Indoor Positioning System) eine weitreichende Funkabdeckung erreicht werden.

### Dritte vorteilhafte Ausgestaltung der Erfindung für eine Anordnung:

Anordnung zur Positionsbestimmung eines mobilen Kommunikationsendgerätes MG1 - MG7, die Anordnung umfassend:
eine serverbasierte Plattform S zur Kollaboration von entsprechend eingerichteten und bei der serverbasierten Plattform registrierten mobilen Kommunikationsendgeräten MG1 - MG6;
eine erste ortsfeste Referenz-Funkbake RFB1, wobei die erste Referenz-Funkbake RFB1 zur Kollaboration mit der serverbasierten Plattform S eingerichtet ist, wobei in der serverbasierten Plattform S die Ortsposition Pos1 und eine Identifikationskennung Id der ersten Referenz-Funkbake RFB1 hinterlegt sind;
wobei die erste Referenz-Funkbake RFB1 dazu eingerichtet ist, ihre Identifikationsnummer Id an mobile Kommunikationsendgeräte MG1 - MG6 zu übertragen, die sich in Funk-Reichweite RWB1 zur ersten Referenz-Funkbake RFB1 befinden,
wobei die in der Funk-Reichweite RWB1 der ersten Referenz-Funkbake RFB1 befindlichen mobilen Kommunikationsendgeräte MG1 - MG6 in Kollaboration mit der serverbasierten Plattform S und der ersten Referenz-Funkbake RFB1 ihre jeweilige Position bestimmen;
wobei ein weiteres, sich nicht in Funk-Reichweite RWB1 der ersten Referenz-Funkbake RFB1 befindliches mobiles Kommunikationsendgerät MG7, seine Position über Triangulation mit mobilen Kommunikationsendgeräten MG2, MG3, MG5, MG6 bestimmt, die sich in Funk-Reichweite RWB1 zur ersten Referenz-Funkbake RFB1 befinden, wobei das weitere mobile Kommunikationsendgerät MG7 fortan als weitere Referenz-Funkbake für weitere mobile Kommunikationsendgeräte fungiert.

Eine vorteilhafte Ausgestaltung liegt darin, dass das weitere mobile Kommunikationsendgerät MG7 als weitere Referenz-Funkbake für weitere mobile Kommunikationsendgeräte fungiert, die sich ausserhalb der Funk-Reichweite RWB1 der ersten ortsfesten Referenz-Funkbake RFB1 befinden.

Eine vorteilhafte Ausgestaltung liegt darin, dass die Anordnung weitere ortsfeste Referenz-Funkbaken umfasst, wobei die weiteren ortsfesten Referenz-Funkbaken jeweils zur Kollaboration mit der serverbasierten Plattform S eingerichtet sind, wobei in der serverbasierten Plattform S die jeweilige Ortsposition und die jeweilige Identifikationskennung der weiteren Referenz-Funkbaken hinterlegt sind.

Eine vorteilhafte Ausgestaltung liegt darin, dass das weitere mobile Kommunikationsendgerät MG7, das sich nicht in der Funk-Reichweite RWB1 der ersten ortsfesten Referenz-Funkbake RFB1 befindet, nicht bei der serverbasierten Plattform S registriert ist.

Eine vorteilhafte Ausgestaltung liegt darin, dass die bei der serverbasierten Plattform S registrierten mobilen Kommunikationsendgeräte ein Mesh-Netzwerk bilden.

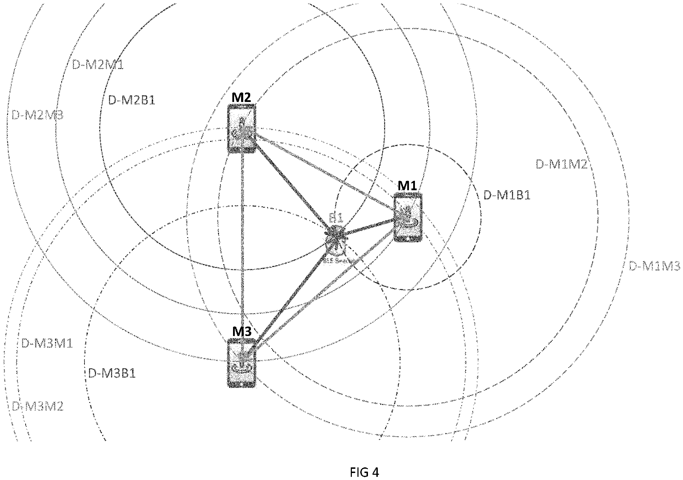

Figur 4 zeigt ein erstes beispielhaftes Szenario zur Positionsbestimmung von mobilen Kommunikationsendgeräten mit einem Beacon (Referenz-Funkbake) B1, dessen exakte Ortsposition im Server hinterlegt ist. Die mobilen Kommunikationsendgeräte M1 - M3 berechnen ihre Ortposition über den Server aus der Entfernung und dem Winkel zum Beacon und zueinander. Die Darstellung gemäss Figur 4 zeigt eine ortsfeste Referenz-Funkbake B1 und mobile Kommunikationsendgeräte M1 - M3 (z.B. entsprechend eingerichtete Smartphones). Die in Figur 4 dargestellten Kreislinien D-M1B1, D-M1M2, D-M1M3, D-M2M3, D-M2M1, D-M2B1, D-M3M2, D-M3M1, D-M3B1 stellen die jeweiligen Entfernungen (Distanzen) zwischen den mobilen Kommunikationsendgeräten M1 - M3 untereinander bzw. zwischen den jeweiligen mobilen Kommunikationsendgeräten M1 - M3 und der Referenz-Funkbake B1 zu einem Zeitpunkt *t₀* dar.

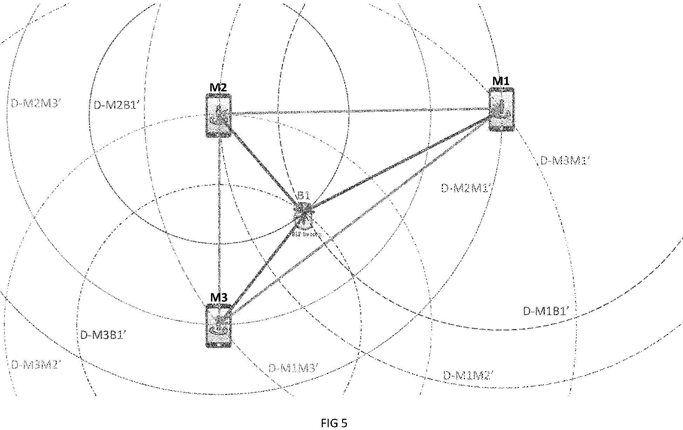

Figur 5 zeigt ein zweites beispielhaftes Szenario zur Positionsbestimmung von mobilen Kommunikationsendgeräten, Figur 5 zeigt die ortsfeste Referenz-Funkbake B1 und die mobilen Kommunikationsendgeräte M1 - M3. Die in Figur 5 dargestellten Kreislinien D-M1B1', D-M1M2', D-M1M3', D-M2M3', D-M2M1', D-M2B1', D-M3M2', D-M3M1', D-M3B1' stellen die jeweiligen Entfernungen (Distanzen) zwischen den mobilen Kommunikationsendgeräten M1 - M3 untereinander bzw. zwischen den jeweiligen mobilen Kommunikationsendgeräten M1 - M3 und der Referenz-Funkbake B1 zu einem Zeitpunkt *tₙ* dar. In der Darstellung gemäss Figur 5 sich die Ortsposition von Gerät M1 gegenüber FIG 4 verändert und damit auch die Entfernung und der Winkel zum Beacon B1 und zu den Geräten M2 und M3. Auf dem Server wird die neue Position von Gerät M1 auf Basis der veränderten (neuen) Daten neu bestimmt.

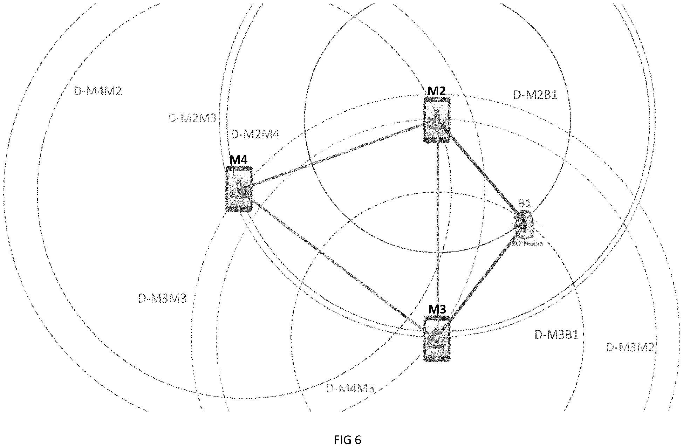

Figur 6 zeigt ein drittes beispielhaftes Szenario zur Positionsbestimmung von mobilen Kommunikationsendgeräten, Figur 6 zeigt die ortsfeste Referenz-Funkbake B1 und die mobilen Kommunikationsendgeräte M2 - M4. Die in Figur 5 dargestellten Kreislinien D-M2M3, D-M2M4, D-M2B1, D-M3M2, D-M3M4, D-M3B1, D-M4M2, D-M4M3 stellen die jeweiligen Entfernungen (Distanzen) zwischen den mobilen Kommunikationsendgeräten M2 - M4 untereinander bzw. zwischen den jeweiligen mobilen Kommunikationsendgeräten M2 - M4 und der Referenz-Funkbake B1 zu einem Zeitpunkt *t₀* dar. In der Darstellung gemäss Figur 6 befindet sich die Ortsposition von Gerät M4 ausserhalb der Funkreichweite der ortsfesten Referenz-Funkbake B1. Da aber im Server die Positionen von den Geräten M2 und M3 bekannt sind, ist auch Gerät M4 in der Lage seine Ortposition über den Server aus der Entfernung und dem Winkel zu den Geräten M2 und M3 zu bestimmen.

Aus Übersichtlichkeitsgründen ist in den Figuren 4 bis 6 der mit Vorteil cloudbasierte Server S (siehe Figur 3) nicht dargestellt.

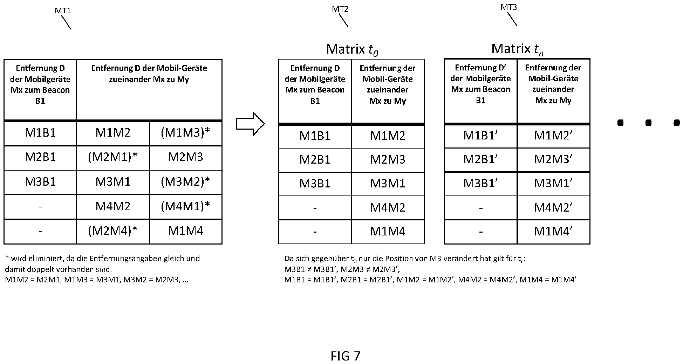

Figur 7 zeigt ein beispielhaftes Diagramm zur Darstellung der zeitlichen Veränderung von Distanz-Matrixen bezüglich der beispielhaften Szenarien gemäss der Figuren 4 bis 6. Die Matrix MT1 zeigt die im System (z.B. Serverbasierte Plattform, Ecosystem) vorhandenen Geräte. Die linke Spalte von Matrix MT1 zeigt die jeweilige Entfernung D der Mobilgeräte Mx zum Beacon B1 (ortsfeste Referenz-Funkbake). Die rechte Spalte von Matrix MT1 zeigt die jeweilige Entfernung D der Mobilgeräte zueinander (Mx zu My) .

Die Matrix MT2 zeigt die jeweligen Entfernungen (Distanzen) der Geräte zum Zeitpunkt t₀.

Die Matrix MT3 zeigt die jeweligen Entfernungen (Distanzen) der Geräte zum Zeitpunkt t₁.

Die Informationen der Matrixen können zur Triangulation verwendet werden.

Bei den mobilen Kommunikationsendgeräten M1 - M4 handelt es sich um Bluetooth-Geräte. Beim Beacon B1 (ortsfeste Referenz-Funkbake) handet es sich z.B. um einen iBeacon, basierend auf Bluetooth Low Energy (BLE).

Die vorliegende Erfindung nutz lediglich einen oder wenige Referenz-Beacon B1, dessen/deren Position im Gebäude genau bekannt und ggf. auch georeferenziert ist/sind. Sie kombiniert damit eine endgerätebasierte (clientseitige) und infrastrukturbasierte (serverseitige) Positionsbestimmung.

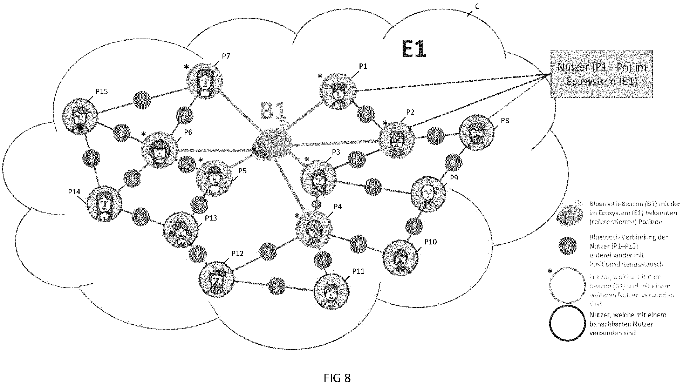

Die mobilen Endgeräte M1 - M3 und M4 (z.B. mobile Kommunikationsendgeräte, z.B. Smartphones) sind über eine installierte Applikation (App) mit dem server- oder cloudbasiertes Ecosystem (E1, siehe Figur 8) bzw. mit einer serverbasierten Plattform (S, siehe Figur 3) verbunden, in dem der ortsfeste (lokale) Beacon B1 mit seiner exakten Position gespeichert ist. Weiterhin sind die relativen Entfernungen der mobilen Endgeräte M1 - M3 zum Beacon B1 ermittelbar. Weiterhin ist die relativen Entfernungen des mobilen Endgerätes M4 zu den mobilen Endgeräten M2-M3 ermittelbar. Um eine Distanz zwischen einem Sender und einem Empfänger zu messen gibt es verschiedene Algorithmen, wie z.B. Time-of-Arrival (TOA), Time-Difference-of-Arrival (TDOA), oder Received-Signal-Strength (RSS).

### Time-of-Arrival (TOA)

Das Prinzip von TOA basiert auf der Messung der absoluten Zeit, die ein Signal von einem Sender zu einem Empfänger benötigt. Dazu ist eine sehr präzise Synchronisation der Uhren von Sender und Empfänger notwendig.

### Time-Difference-of-Arrival (TDOA)

Im Gegensatz zu TOA muss der Empfänger bei TDOA nicht die absolute Zeit wissen, wann das Signal übertragen wurde, es genügt die Zeitdifferenz der Ankunft des Signals von synchronisierten Sendern.

### Received-Signal-Strength (RSS)

Bei RSS basiert die Messung der Distanz auf der gemessenen Signalstärke, was nur bei Funksignalen möglich ist. Um die Entfernung vom Sender zum Empfänger zu ermitteln, wird die Signalstärke gemessen und ausgewertet.

Prinzipiell kann eine Bestimmung der Distanz auch über eine Messung und Auswertung von Signallaufzeiten erfolgen.

Das Verfahren beinhaltet das Lokalisieren und Verfolgen einer Vielzahl mobiler elektronischer Bluetooth-Geräte M1-M4 in einer Innenraumumgebung, die durch den Beitritt in das Ecosystem (E1, siehe Figur 8; S, siehe Figur 3) ihre Distanzen relativ zueinander und wenn in Reichweite zu einem Referenz-Beacon B1 austauschen können. Über Triangulation der mobilen elektronischen Bluetooth-Geräte M1 - M4 zueinander ist in Verbindung mit dem Referenz-Beacon B1 die Bestimmung der Position der mobilen elektronischen Bluetooth-Geräte zu einem Zeitpunkt t₀ möglich. Diese werden zyklisch im Ecosystem E1 (siehe Figur 8) bzw. im Server S (siehe Figur 3) verarbeitet und stehen somit aktualisiert allen eingeloggten mobilen elektronischen Bluetooth-Geräten M1 - M4 auch zu einem Zeitpunkt tₙ zur Verfügung. Je mehr mobile elektronische Bluetooth-Geräte im Ecosystem bzw. in der serverbasierten Plattform registriert sind und damit ihre relative Position teilen, umso besser wird die Positionsbestimmung der einzelnen Geräte M1 - M4. In einem Mesh-Netzwerk können so auch mobile elektronische Bluetooth-Geräte M) ihre Position bestimmen, auch wenn diese nicht direkt mit dem referenzierten Beacon B1 Daten austauschen können.

Über Triangulation der mobilen elektronischen Bluetooth-Geräte M1 - M4 zueinander ist in Verbindung mit dem Referenz-Beacon B1 die Positionsbestimmung der mobilen elektronischen Bluetooth-Geräte M1 - M4 möglich. Durch ein Opt-in bzw. durch Kollaboration in das Positioning-Ecosystem teilen alle mobilen Geräte M1 - M4 ihre relative Position zueinander, was die Berechnung der absoluten Position über Triangulation ermöglicht. Sind mobilen elektronischen Bluetooth-Geräte M1 - M4 immer in Distanz zueinander, können einem Mesh-Netzwerk auch periphere mobile elektronische Bluetooth-Geräte M4, welche nicht direkt mit einem Beacon B1 in Verbindung stehen, ihre Position ermitteln.

Mit Vorteil erfolgt das Opt-in (Zustimmung) bzw. die Anmeldung zur Kollaboration in das Positioning-Ecosystem durch eine entsprechende App auf den mobilen Geräten.

Figur 8 zeigt ein beispielhaftes Mesh-Netzwerk von mobilen Kommunikationsendgeräten von jeweils beteiligten Nutzern bzw. Benutzern B1 - P15. Die Nutzer bzw. Benutzer B1 - P15 bilden mit ihren Kommunikationsendgeräten (z.B. Bluetooth fähige Smartphones) ein Ecosystem E1. Mit Vorteil sind die Benutzer B1 - P15 über eine entsprechende App bzw. über ein geeignetes Opt-in-Verfahren beim Ecosystem E1 registriert. Das Ecoystem E1 umfasst mindestens eine ortsfeste Referenz-Funkbake B1 (z.B. ein iBeacon basierend auf Bluetooth BLE, dessen Ortskoordinaten (Verbauungsort) im Ecosystem E1 bekannt sind. Das Ecosystem E1 umfasst geeignete Datenverarbeitungs-, Speicher-, und Kommunikationsmittel. In der Darstellung gemäss Figur 8 sind die Benutzer B1 - P7 direkt (d.h. in direkter Kommunikation) mit der ortsfesten Referenz-Funkbake B1 verbunden. In Figur 8 sind die Benutzer B1 - P7, die direkt mit der ortsfesten Referenz-Funkbake B1 verbunden sind jeweils als Kreis mit Stern dargestellt. Die Benutzer P8 - P15 sind nicht direkt mit der ortsfesten Referenz-Funkbake B1 verbunden, sondern mit benachbarten Benutzern. Die Benutzer P8 - P15, die nicht direkt mit der ortsfesten Referenz-Funkbake B1 verbunden sind, sind in Figur 8 jeweils als Kreis ohne Stern dargestellt. Durch Kollaboration der Benutzer P1 - P15 untereinander, kann auch die Position von Benutzern P8 - P15 bestimmt werden, die nicht direkt mit der ortsfesten Referenz-Funkbake B1 verbunden sind. Die mobilen Kommunikationsendgeräten von Benutzern P8 - P15, die nicht direkt mit der ortsfesten Referenz-Funkbake B1 verbunden sind, können auch als weitere Referenz-Funkbake fungieren und zur Positionsbestimmung verwendet werden.

Die vorliegende Erfindung benötigt wesentlich weniger installierte Infrastruktur (Beacons, Referenz-Funkbaken) und ist damit kostengünstiger als die bekannten Standardinstallationen.

Eine weitere Ausgestaltung der Erfindung liegt in einer zusätzlichen Nutzung der sogenannten "Pedestrian Dead Reckoning"-Methode (Koppelnavigation). Dadurch wird u.a. die Genauigkeit bei der Positionsbestimmung erhöht. Es ist die Positionsbestimmung durch ein inertiales System. Dabei werden alle die Bewegungen des Nutzers kontinuierlich aufgenommen, ausgewertet und daraus stets neue Positionen berechnet. Dieser Ansatz zeichnet sich vor allem durch die iterative Art der Positionsbestimmung aus.

In einem Mesh-Netzwerk können auch mobile elektronische Bluetooth-Geräte ihre Position bestimmen, auch wenn diese nicht mit dem Beacon (ortsfeste Feferenz-Funkbake) in Verbindung stehen. Ein weiterer Vorteil kann aus dem Ecosystem E1 der mobilen Geräte und deren Nutzer P1 - P15 entstehen, welches ein Opt-in zur Nutzung des Service voraussetzt. Z.B. Friend-Finder in einer Shopping Mall.

Die vorliegende Erfindung nutzt lediglich einen oder wenige Referenz-Beacon, dessen/deren Position im Gebäude genau bekannt sein sollten und welche ggf. auch georeferenziert ist/sind. Die Erfindung kombiniert vorteilhaft endgerätebasierte (clientseitige) und infrastrukturbasierte (serverseitige) Positionsbestimmungsverfahren. Auch mobile elektronische Bluetooth-Geräte, welche nicht direkt mit einem Beacon verbunden aber Teil des Mesh-Netzwerks sind, können mit diesem neuen Verfahren ihre Position ermitteln. Z.B. ist über Triangulation der mobilen elektronischen Bluetooth-Geräte P1 - P15 (d.h. der Benutzer P1 - P15 mit den Bluetooth-Geräten) zueinander, in Verbindung mit dem Referenz-Beacon B1 die Positionsbestimmung der mobilen elektronischen Bluetooth-Geräte P1 - P15 möglich. Durch das Opt-in in das Positioning-Ecosystem E1 teilen alle Geräte ihre relative Position zueinander, was die Berechnung der absoluten Position über Triangulation ermöglicht. Sind mobilen elektronischen Bluetooth-Geräte immer in Distanz zueinander, können einem Mesh-Netzwerk auch periphere mobile elektronische Bluetooth-Geräte, welche nicht direkt mit einem Beacon in Verbindung stehen, ihre Position ermitteln.

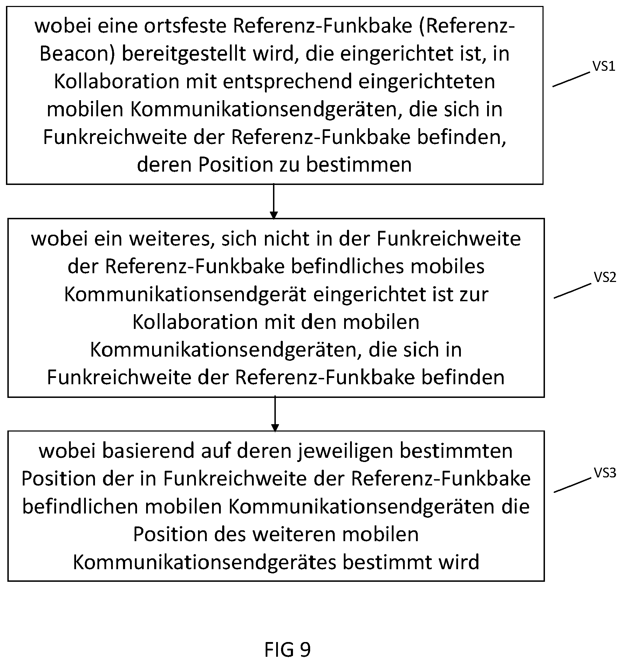

Figur 9 zeigt ein beispielhaftes Flussdiagramm für ein Verfahren zur Positionsbestimmung eines mobilen Kommunikationsendgerätes,
(VS1) wobei eine ortsfeste Referenz-Funkbake (Referenz-Beacon) bereitgestellt wird, die eingerichtet ist, in Kollaboration mit entsprechend eingerichteten mobilen Kommunikationsendgeräten, die sich in Funkreichweite der ortsfesten Referenz-Funkbake befinden, deren Position zu bestimmen;
(VS2) wobei ein weiteres, sich nicht in der Funkreichweite der ortsfesten Referenz-Funkbake befindliches mobiles Kommunikationsendgerät eingerichtet ist zur Kollaboration mit den mobilen Kommunikationsendgeräten, die sich in Funkreichweite der ortsfesten Referenz-Funkbake befinden; und
(VS3) wobei basierend auf deren jeweiligen bestimmten Position der in Funkreichweite der ortsfesten Referenz-Funkbake befindlichen mobilen Kommunikationsendgeräten die Position des weiteren mobilen Kommunikationsendgerätes bestimmt wird.

Vorteilhafterweise ist die ortsfeste Referenz-Funkbake (Referenz-Beacon) eingerichtet ist, in Kollaboration mit entsprechend eingerichteten mobilen Kommunikationsendgeräten, die sich in Funkreichweite der Referenz-Funkbake befinden, über Triangulation und/oder über Messung von Signalstärken und/oder Signallaufzeiten deren Position zu bestimmen.

Mit Vorteil wird die Position des weiteren mobilen Kommunikationsendgerätes bestimmt, basierend auf der jeweiligen bestimmten Position der in Funkreichweite der ortsfesten Referenz-Funkbake befindlichen mobilen Kommunikationsendgeräte, über Triangulation und/oder über Messung von Signalstärken und/oder Signallaufzeiten der entsprechenden mobilen Kommunikationsendgeräte.

Mit Vorteil fungiert das weitere mobile Kommunikationsendgerät fortan als weitere Referenz-Funkbake für weitere mobile Kommunikationsendgeräte.

Bei der ortsfesten Referenz-Funkbake handelt es sich z.B. um einen iBeacon, basierend auf Bluetooth BLE Technologie. Die mobilen Kommunikationsendgeräte sind z.B. Bluetooth fähige Smartphones. Das Verfahren wird, wie die entsprechenden Anordnungen zur Positionsbestimmung mit Vorteil in einer serverbasierten Cloudinfrastruktur realisiert.

Mit Vorteil sind die mobilen Kommunikationsendgeräte in einem Ecosystem angemeldet bzw. registriert. Mit Vorteil werden die die Nutzer mit ihrem mobilen Kommunikationsendgeräten von einem entsprechend eingerichteten Server des Ecosystems angemeldet und verwaltet. Mit Vorteil handelt es sich um einen Cloudbasierten Server.

Wenn z.B. für jede Etage eines Gebäudes ein Ecosystem vorhanden ist, gibt es keine Beeinflussung der Systeme untereinander. Der Server verwaltet die Ecosysteme (E1 bis En) und weiss daher, welche mobilen Kommunikationsendgeräte welchem Ecosystem zugeordnet sind.

Verfahren und Anordnung zur Positionsbestimmung eines mobilen Kommunikationsendgerätes, wobei eine ortsfeste Referenz-Funkbake (Referenz-Beacon) bereitgestellt wird, die eingerichtet ist, in Kollaboration mit entsprechend eingerichteten mobilen Kommunikationsendgeräten, die sich in Funkreichweite der Referenz-Funkbake befinden, deren Position zu bestimmen, wobei ein weiteres, sich nicht in der Funkreichweite der Referenz-Funkbake befindliches mobiles Kommunikationsendgerät eingerichtet ist zur Kollaboration mit den mobilen Kommunikationsendgeräten, die sich in Funkreichweite der Referenz-Funkbake befinden, und wobei basierend auf deren jeweiligen bestimmten Position der in Funkreichweite der Referenz-Funkbake befindlichen mobilen Kommunikationsendgeräten die Position des weiteren mobilen Kommunikationsendgerätes bestimmt wird. Ein besonderer Vorteil der vorliegenden Erfindung liegt darin, dass die Reichweite zur Bestimmung der Position von mobilen Kommunikationsendgeräten nicht durch die Funkreichweite einer ortsfesten Referenz-Funkbake begrenzt ist. Mobile Kommunikationsendgeräte die sich innerhalb der Funkreichweite der ortsfesten Referenz-Funkbake befinden, fungieren als Repeater für weitere mobile Kommunikationsendgeräte, die sich ausserhalb der Funkreichweite der ortsfesten Referenz-Funkbake befinden.

### Bezugszeichen

FB1 - FB18 Funkbake
RFB1, B1 Referenz-Funkbake
RWB1 Funkreichweite
S Server
C Cloudinfrastruktur
KR1 - KR3 Kommunikationsregion
Id1 Identifikationskennung
Pos1 Ortsposition
Pos_MG2, Pos_MG2 Position
Pos_MG6, Pos_MG7 Position
KV1 - KV3 Kommunikationsverbindung
BS1 - BS4 Funksignal
MG, MG1 - MG7, M1 - M4 Mobiles Kommunikationsendgerät
App App
P, P1 - P15 Benutzer
GB Gebäude
D-M1B1,D-M1M2,D-M1M3,D-M2M3, D-M2M1,D-M2B1,D-M3M2,D-M3M1, D-M3B1,D-M1B1',D-M1M2',D-M1M3', D-M2M3',D-M2M1',D-M2B1',D-M3M2', D-M3M1',D-M3B1',D-M2M4,D-M3M4, D-M4M2,D-M4M3 Distanzen
MT1 - MT3 Matrix
E1 Ecosystem
VS1 - VS3 Verfahrensschritt

## Patentansprüche

1. Anordnung zur Positionsbestimmung eines mobilen Kommunikationsendgerätes (MG, MG1 - MG7, M1 - M4),
wobei eine ortsfeste Referenz-Funkbake (RFB1) eingerichtet ist, in Kollaboration mit entsprechend eingerichteten mobilen Kommunikationsendgeräten (MG1 - MG6), die sich in Funkreichweite (RWB1) der ortsfesten Referenz-Funkbake (RFB1) befinden, deren Position zu bestimmen,
wobei ein weiteres, sich nicht in der Funkreichweite (RWB1) der ortsfesten Referenz-Funkbake (RFB1) befindliches mobiles Kommunikationsendgerät (MG7) eingerichtet ist zur Kollaboration mit den mobilen Kommunikationsendgeräten (MG1 - MG6), die sich in Funkreichweite (RWB1) der ortsfesten Referenz-Funkbake (RFB1) befinden, und
wobei basierend auf deren jeweiligen bestimmten Position der in Funkreichweite (RWB1) der ortsfesten Referenz-Funkbake (RFB1) befindlichen mobilen Kommunikationsendgeräten (MG1 - MG6) die Position des weiteren mobilen Kommunikationsendgerätes (MG7) bestimmt wird.

2. Anordnung nach Anspruch 1, wobei die ortsfeste Referenz-Funkbake (RFB1) eingerichtet ist, in Kollaboration mit entsprechend eingerichteten mobilen Kommunikationsendgeräten (MG1 - MG6), die sich in Funkreichweite (RWB1) der ortsfesten Referenz-Funkbake (RFB1) befinden, über Triangulation und/oder Trilateration und/oder Fingerprinting und/oder über Messung von Signalstärken und/oder Signallaufzeiten deren Position zu bestimmen.

3. Anordnung nach einem der vorstehenden Ansprüche, wobei die Position des weiteren mobilen Kommunikationsendgerätes (MG7) bestimmt wird, basierend auf der jeweiligen bestimmten Position der in Funkreichweite (RWB1) der ortsfesten Referenz-Funkbake (RFB1) befindlichen mobilen Kommunikationsendgeräte (MG1 - MG6), über Triangulation und/oder über Messung von Signalstärken und/oder Signallaufzeiten der entsprechenden mobilen Kommunikationsendgeräte (MG1 - MG7).

4. Anordnung nach einem der vorstehenden Ansprüche, wobei das weitere mobile Kommunikationsendgerät (MG7) fortan als weitere Funkbake für weitere mobile Kommunikationsendgeräte fungiert.

5. Verfahren zur Positionsbestimmung eines mobilen Kommunikationsendgerätes (MG, MG1 - MG7, M1 - M4),
wobei eine ortsfeste Referenz-Funkbake (RFB1) bereitgestellt wird, die eingerichtet ist, in Kollaboration mit entsprechend eingerichteten mobilen Kommunikationsendgeräten (MG1 - MG6), die sich in Funkreichweite (RWB1) der ortsfesten Referenz-Funkbake (RFB1) befinden, deren Position zu bestimmen,
wobei ein weiteres, sich nicht in der Funkreichweite (RWB1) der ortsfesten Referenz-Funkbake (RFB1) befindliches mobiles Kommunikationsendgerät (MG7) eingerichtet ist zur Kollaboration mit den mobilen Kommunikationsendgeräten (MG1 - MG6), die sich in Funkreichweite (RWB1) der ortsfesten Referenz-Funkbake (RFB1) befinden, und
wobei basierend auf deren jeweiligen bestimmten Position der in Funkreichweite (RWB1) der ortsfesten Referenz-Funkbake (RFB1) befindlichen mobilen Kommunikationsendgeräten (MG1 - MG6) die Position des weiteren mobilen Kommunikationsendgerätes (MG7) bestimmt wird.

6. Anordnung zur Positionsbestimmung eines mobilen Kommunikationsendgerätes (MG, MG1 - MG7, M1 - M4), die Anordnung umfassend:
eine serverbasierte Plattform (S, E1, C) zur Kollaboration von entsprechend eingerichteten und bei der serverbasierten Plattform (S, E1, C) registrierten mobilen Kommunikationsendgeräten (MG1 - MG6);
eine erste ortsfeste Referenz-Funkbake (RFB1), wobei die erste ortsfeste Referenz-Funkbake (RFB1) zur Kollaboration mit der serverbasierten Plattform (S, E1, C) eingerichtet ist, wobei in der serverbasierten Plattform (S, E1, C) die Ortsposition (Pos1) und eine Identifikationskennung (Id1) der ersten ortsfesten Referenz-Funkbake (RFB1) hinterlegt sind;
wobei die erste ortsfeste Referenz-Funkbake (RFB1) dazu eingerichtet ist, ihre Identifikationsnummer (Id1) an mobile Kommunikationsendgeräte (MG1 - MG6) zu übertragen, die sich in Funk-Reichweite (RWB1) zur ersten ortsfesten Referenz-Funkbake (RFB1) befinden,
wobei die in der Funk-Reichweite (RWB1) der ersten ortsfesten Referenz-Funkbake (RFB1) befindlichen mobilen Kommunikationsendgeräte (MG1 - MG6) in Kollaboration mit der serverbasierten Plattform (S, E1, C) und der ersten ortsfesten Referenz-Funkbake (RFB1) ihre jeweilige Position bestimmen; **dadurch gekennzeichnet, dass**
ein weiteres mobiles Kommunikationsendgerät (MG7), in dessen Funk-Reichweite (KR3) sich mindestens drei mobile Kommunikationsendgeräte (MG2,MG3,MG5,MG6) befinden, deren Position (Pos_MG2, Pos_MG3, Pos_MG5, Pos_MG6) jeweils bekannt ist, seine Position über Triangulation und/oder Trilateration und/oder Fingerprinting mit diesen mindestens drei mobilen Kommunikationsendgeräten (MG2,MG3,MG5,MG6) bestimmt, wobei das weitere mobile Kommunikationsendgerät (MG7) sich nicht in der Funk-Reichweite (RWB1) der ersten ortsfesten Referenz-Funkbake (RFB1) befindet.

7. Anordnung nach Anspruch 6, wobei die ortsfeste Referenz-Funkbake (RFB1) und die serverbasierte Plattform (S, E1, C) eingerichtet sind, in Kollaboration mit den entsprechend eingerichteten mobilen Kommunikationsendgeräten (MG1 - MG6), die sich in Funkreichweite (RWB1) der ortsfesten Referenz-Funkbake (RFB1) befinden, über Triangulation und/oder Fingerprinting und/oder über Messung von Signalstärken und/oder Signallaufzeiten deren jeweilige Position zu bestimmen.

8. Anordnung nach Anspruch 6 oder 7, wobei das weitere mobile Kommunikationsendgerät (MG7), das sich nicht in der Funk-Reichweite (RWB1) der ersten ortsfesten Referenz-Funkbake (RFB1) befindet, und die mindestens drei mobilen Kommunikationsendgeräte (MG2,MG3,MG5,MG6), die sich in der Funk-Reichweite (KR3) des weiteren mobilen Kommunikationsendgerätes (MG7) befinden, weiter eingerichtet sind, über Messung von Signalstärken und/oder Signallaufzeiten die Position des weiteren mobilen Kommunikationsendgerätes (MG7) zu bestimmen.

9. Anordnung nach einem der Ansprüche 6 bis 8, wobei das weitere mobile Kommunikationsendgerät (MG7) fortan als weitere Funkbake fungiert.

10. Anordnung nach einem der Anspruch 9, wobei das weitere mobile Kommunikationsendgerät (MG7) als weitere Funkbake für weitere mobile Kommunikationsendgeräte fungiert, die sich ausserhalb der Funk-Reichweite (RWB1) der ersten ortsfesten Referenz-Funkbake (RFB1) befinden.

11. Anordnung nach einem der Ansprüche 6 bis 10, wobei die Anordnung weitere ortsfeste Referenz-Funkbaken umfasst, wobei die weiteren ortsfesten Referenz-Funkbaken jeweils zur Kollaboration mit der serverbasierten Plattform (S, E1, C) eingerichtet sind, wobei in der serverbasierten Plattform (S, E1, C) die jeweilige Ortsposition und die jeweilige Identifikationskennung der weiteren ortsfesten Referenz-Funkbaken hinterlegt sind.

12. Anordnung nach einem der Ansprüche 6 bis 11, wobei die bei der serverbasierten Plattform (S, E1, C) registrierten mobilen Kommunikationsendgeräte ein Mesh-Netzwerk bilden.

13. Anordnung zur Positionsbestimmung eines mobilen Kommunikationsendgerätes (MG, MG1 - MG7, M1 - M4), die Anordnung umfassend:
eine serverbasierte Plattform (S, E1, C) zur Kollaboration von entsprechend eingerichteten und bei der serverbasierten Plattform (S, E1, C) registrierten mobilen Kommunikationsendgeräten (MG1 - MG6);
eine erste ortsfeste Referenz-Funkbake (RFB1), wobei die erste ortsfeste Referenz-Funkbake (RFB1) zur Kollaboration mit der serverbasierten Plattform (S, E1, C) eingerichtet ist, wobei in der serverbasierten Plattform (S, E1, C) die Ortsposition (Pos1) und eine Identifikationskennung (Id1) der ersten ortsfesten Referenz-Funkbake (RFB1) hinterlegt sind;
wobei die erste ortsfeste Referenz-Funkbake (RFB1) dazu eingerichtet ist, ihre Identifikationsnummer (Id1) an mobile Kommunikationsendgeräte (MG1 - MG6) zu übertragen, die sich in Funk-Reichweite (RWB1) zur ersten ortsfesten Referenz-Funkbake (RFB1) befinden,
wobei die in der Funk-Reichweite (RWB1) der ersten ortsfesten Referenz-Funkbake (RFB1) befindlichen mobilen Kommunikationsendgeräte (MG1 - MG6) in Kollaboration mit der serverbasierten Plattform (S, E1, C) und der ersten ortsfesten Referenz-Funkbake (RFB1) ihre jeweilige Position bestimmen; **dadurch gekennzeichnet, dass**
dass ein weiteres, sich nicht in Funk-Reichweite (RWB1) der ersten ortsfesten Referenz-Funkbake (RFB1) befindliches mobiles Kommunikationsendgerät (MG7), seine Position über Triangulation und/oder Trilateration mit mobilen Kommunikationsendgeräten (MG1 - MG6) bestimmt, die sich in Funk-Reichweite (RWB1) zur ersten ortsfesten Referenz-Funkbake (RFB1) befinden, wobei das weitere mobile Kommunikationsendgerät (MG7) fortan als weitere Funkbake für weitere mobile Kommunikationsendgeräte fungiert.

14. Anordnung nach einem der Anspruch 13, wobei das weitere mobile Kommunikationsendgerät (MG7) als weitere Funkbake für weitere mobile Kommunikationsendgeräte fungiert, die sich ausserhalb der Funk-Reichweite (RWB1) der ersten ortsfesten Referenz-Funkbake (RFB1) befinden.

15. Anordnung nach einem der Ansprüche 13 bis 14, wobei die Anordnung weitere ortsfeste Referenz-Funkbaken umfasst, wobei die weiteren ortsfesten Referenz-Funkbaken jeweils zur Kollaboration mit der serverbasierten Plattform (S, E1, C) eingerichtet sind, wobei in der serverbasierten Plattform (S, E1, C) die jeweilige Ortsposition und die jeweilige Identifikationskennung der weiteren ortsfesten Referenz-Funkbaken hinterlegt sind.

16. Anordnung nach einem der Ansprüche 13 bis 15, wobei die bei der serverbasierten Plattform (S, E1, C) registrierten mobilen Kommunikationsendgeräte ein Mesh-Netzwerk bilden.
